# EUROPÄISCHE PATENTANMELDUNG

(11) **EP 3 944 992 A1**
(43) Veröffentlichungstag der Anmeldung: **02.02.2022**
(21) Anmeldenummer: 21188813.6
(22) Anmeldetag: 30.07.2021
(51) Int. Cl.: B60R 13/04, E06B 3/88

(54) **KANTENSCHUTZ, VERWENDUNG EINES KANTENSCHUTZES FÜR DEN TEMPORÄREN SCHUTZ EINER TÜRKANTE, KIT-OF-PARTS UMFASSEND EINEN KANTENSCHUTZ UND EIN ODER MEHRERE BEFESTIGUNGSMITTEL SOWIE TÜR UMFASSEND MINDESTENS EINEN KANTENSCHUTZ**

(30) Priorität: 31.07.2020 DE 202020104453 U
(71) Anmelder: AEROLIFT Kunststoff- und Oberflächentechnik GmbH, 63110 Rodgau (DE)
(72) Erfinder: MIETH, Holger, 63500 Seligenstadt (DE); HAMANN, Stefan, 63322 Rödermark (DE)
(74) Vertreter: Metten, Karl-Heinz

(57) **Zusammenfassung**

Die vorliegende Erfindung betrifft einen Kantenschutz für eine Kraftfahrzeugtür mit einer verfahrbaren Kantenschutzlippe (2), einem Verlängerungsstück (4), einem Anlageabschnitt (6), einem Zugabschnitt (12), einem Hebelelement (14) mit einem Hebelarm (16), welcher ausgelegt und eingerichtet ist, um mit dem Zugabschnitt (12) derart wechselzuwirken, dass der Abstand des Zugabschnitts (12) zu der Vorderseite (8) des Anlageabschnitts (6) unter im Wesentlichen gleichzeitiger Bewegung der Kantenschutzlippe (2) zur mindestens partiellen Freigabe einer zu schützenden Kante (18) verringerbar ist.

## Beschreibung

Die vorliegende Erfindung betrifft einen Kantenschutz, insbesondere einen temporären Kantenschutz, insbesondere für eine Kraftfahrzeugtür, die Verwendung eines Kantenschutzes für den, insbesondere temporären, Schutz einer Türkante, insbesondere einer Fahrzeugtürkante und ein Kit-of-parts umfassend einen erfindungsgemäßen Kantenschutz und ein oder mehrere Befestigungsmittel sowie eine Tür, insbesondere eine Kraftfahrzeugtür, umfassend mindestens einen erfindungsgemäßen Kantenschutz und ein Kraftfahrzeug umfassend eine Kraftfahrzeugtür mit mindestens einem erfindungsgemäßen Kantenschutz.

Insbesondere bei nach außen schwenkbaren Türen besteht immer die Gefahr, dass diese beim Öffnen gegen einen Gegenstand stoßen, was insbesondere bei Kraftfahrzeugtüren, aber auch anderen empfindlichen Türen wie beispielsweise Glas- oder Sicherheitstüren, ein Problem darstellen kann. Zum einen besteht die Gefahr, die Tür selbst zu beschädigen, zum anderen können die Gegenstände, gegen die die Tür stößt, Schaden davon tragen, insbesondere bei massiven Türen.

Im Bereich von Fahrzeugtüren entstehen solche Schäden insbesondere beim Aussteigen des Fahrzeugnutzers in Garagen, in Tiefgaragen oder auf sonstigen Parkarealen - zumeist insbesondere durch die eingeschränkte Sicht des Fahrzeugführers - wobei die Fahrzeugtür beim Öffnen aufgrund der beengten Raumsituation gegen eine Stein- oder Betonmauer oder ein Nachbarfahrzeug stoßen kann. Im besten Fall entstehen an den Stoßstellen der Fahrzeugtür nur einige "Kratzer" aufgrund von abgesplittertem Lack, doch auch diese bergen die Gefahr der Rostbildung aufgrund einer fehlenden Lack-Schutzschicht an den Stoßstellen. Eine Ausbesserung der Lackierung eben nur an jener Stelle ist sehr kosten- und zeitaufwendig; oftmals müssen ganze Fahrzeugteile, wie beispielsweise die komplette Fahrzeugtür, neu lackiert werden, so dass ein harmonischer optischer Farbeindruck entsteht und keine Farbübergänge sichtbar sind.

Neben den Schäden an der Fahrzeugtür selbst kann es durch nach außen schwenkbare Türen insbesondere bei nebeneinander geparkten Fahrzeugen auch zu Lackschäden an Nachbarfahrzeugen kommen.

Türkantenschutze für Kraftfahrzeuge sind aus dem Stand der Technik hinreichend bekannt. Standardmäßig sind diese als Formteile aus Gummi oder auch Kunststoffprofilen ausgebildet, welche partiell oder vollständig auf dem äußeren Türrand permanent montiert werden und zwar in der Art, dass diese über die Türkante hinausragen, von außen also sichtbar sind. Diese beeinflussen nicht nur die Gesamtoptik des Fahrzeugs in negativer Weise, sondern führen aufgrund der Unterbrechung der Stromlinienförmigkeit des Fahrzeugs auch zu Windgeräuschen beim Fahren oder können zu Problemen in Autowaschanlagen führen.

Inzwischen gibt es einige Ansätze, Systeme zu entwickeln, welche die vorangehenden Nachteile umgehen sollen.

Die DE 35 23 391 A1 zeigt einen Kantenschutz für eine Kraftfahrzeugtür angeordnet im Zwischenraum zwischen Tür und Karosserie hinter der Türkante, um von dort nach außen über die Türkante hinaus verschiebbar und zurückziehbar zu sein, ohne dabei von außen sichtbar zu sein.

Die DE 20 2014 005 791 U1 offenbart eine Kantenschutzvorrichtung aus einem elastischen Material mit spezieller Formgebung zur temporären Anbringung an einer geöffneten Fahrzeugtür, wobei das Formteil einen durchgehenden Schlitz zum periodischen Aufstecken an der Türkante aufweist.

Die DE 10 2014 016 489 A1 zeigt einen Türkantenschutz zur Anbringung an einer Kraftfahrzeugtür mit einer flexiblen Lasche zum Umschließen eines Kantenabschnitts eines Türfalzes, einem Befestigungsabschnitt und einem Klemmkörper, welcher beim Schließen der Kraftfahrzeugtür in Anlagestellung mit einem ortsfesten Anschlag bringbar ist und dafür sorgt, dass die Lasche an einer Innenseite des Türfalzes zu liegen kommt.

Die alternativen Systeme, die aus dem Stand der Technik bekannt sind, zeigen Schutzvorrichtungen von Fahrzeugtürkanten, die im Falle einer geöffneten Tür kurzzeitig aufgesteckt und nach Nutzung beim Schließen der Tür wieder abgenommen werden müssen. Diese Systeme liefern jedoch keinen Schutz beim "unbedachten" Öffnen einer Fahrzeugtür, insbesondere auf begrenztem Raum. Vielmehr muss der Nutzer die Fahrzeugtür einen Spalt öffnen und besagte Systeme in beengtem Raum an der richtigen Stelle, also der Stelle der Fahrzeugtür, welche am weitesten vom Fahrzeug wegreicht, platzieren. Außerdem muss der Nutzer beim Schließen der Tür bedenken, dass solch ein Schutzsystem angebracht ist. Insbesondere bei voluminösen, härteren Materialien solcher Schutzvorrichtungen, kann es sonst beim ruckartigen Schließen der Tür zu den eben gewünscht vermeidbaren Schäden kommen.

Die permanent an der Tür angebrachten Systeme stellen meist auf federelastische Schutzvorrichtungen ab. Der Nachteil hierbei liegt darin, dass die Federn in solchen Systemen bei geschlossenen Fahrzeugtüren unter ständiger Spannung stehen, was zu einer schnellen Materialermüdung führt, sodass solche Schutzvorrichtungen öfter ausgewechselt werden müssen. Ein weiterer Nachteil ist das Material solcher federelastischen Schutzvorrichtungen, welche zumeist aus Metall bestehen. Zum einen kann es zu Reibungen zwischen der metallischen Schutzvorrichtung und dem Fahrzeuglack kommen, was die unerwünschten Lackschäden hervorruft, zum anderen sind solche Systeme häufig anfällig für Rost durch den Kontakt mit Feuchtigkeit, wie beispielsweise witterungsbedingt oder in Autowaschanlagen.

Die bekannten permanent eingebauten Systeme aus elastischeren Materialien, wie beispielsweise Gummi, weisen den Nachteil auf, dass diese zumeist vom Hersteller eingebaut werden müssen, beispielsweise in Türdichtungen integriert vorliegen, sodass ein Nachrüsten mit solchen Systemen nicht möglich ist.

Die aus dem Stand der Technik bekannten Systeme sind noch stets mit Nachteilen behaftet und lassen Wünsche offen. Der vorliegenden Erfindung lag daher die Aufgabe zugrunde, die Nachteile des Stands der Technik betreffend Kantenschutzsysteme für Türen, insbesondere Kraftfahrzeugtüren, zu überwinden und einen einfachen, kostengünstigen und langlebigen Kantenschutz bereitzustellen, welcher bei geschlossener Tür vorzugsweise nicht sichtbar ist und damit keinen störenden optischen Eindruck hinterlässt und welcher sowohl serienmäßig vom Hersteller eingebaut werden kann, als auch für eine Nachrüstung durch den Fahrzeugnutzer selbst geeignet ist.

Demgemäß wurde ein Kantenschutz, insbesondere ein temporärer Kantenschutz, insbesondere für eine Kraftfahrzeugtür, gefunden mit einer verfahrbaren, insbesondere in Richtung einer zu schützenden Kante vorgebogenen, Kantenschutzlippe mit einem Lippenende und einem Lippenanfang, einem die Kantenschutzlippe im Bereich des Lippenendes verlängernden Verlängerungsstück mit einem in Bezug auf die Kantenschutzlippe distalen und einem proximalen Ende, einem Anlageabschnitt mit einer Vorder- und einer Rückseite, eingerichtet und ausgelegt, um mit seiner Rückseite an einer Unterlage, insbesondere einem Kraftfahrzeugtürinnenbereich verbindbar zu sein, der mit dem proximalen Ende des Verlängerungsstücks, insbesondere einstückig, verbunden ist, einem Zugabschnitt mit einem ersten und einen gegenüberliegenden zweiten Endabschnitt, der über seinen ersten Endabschnitt mit dem distalen Ende des Verlängerungsstücks, insbesondere einstückig, verbunden ist und einem Hebelelement mit einem Hebelarm, welcher ausgelegt und eingerichtet ist, um mit dem zweiten Endabschnitt des Zugabschnitts, insbesondere miteinander verbunden vorliegend, derart wechselzuwirken, dass der Abstand des zweiten Endabschnitts des Zugabschnitts zu der Vorderseite des Anlageabschnitts unter im Wesentlichen gleichzeitiger Bewegung der Kantenschutzlippe zur mindestens partiellen Freigabe einer zu schützenden Kante verringerbar ist.

Ein "temporärer Kantenschutz" im Sinne der vorliegenden Erfindung beschreibt einen Kantenschutz, der permanent an der Fahrzeugtür im Innenbereich angebracht vorliegt und dessen Kantenschutzlippe verfahrbar in Richtung einer zu schützenden Kante sein soll, sodass diese Kante durch die Kantenschutzlippe jedenfalls abschnittsweise abgedeckt und damit geschützt wird, sobald die Tür geöffnet wird und dass die Kantenschutzlippe die zu schützende Kante nicht mehr schützend umschließt, sobald der Schutz der Kante nicht mehr notwendig ist, d.h. die Tür geschlossen vorliegt. Mit anderen Worten, der erfindungsgemäße Kantenschutz ist permanent vorhanden, die Schutzwirkung über die eine Kante, z.B. Türkante umschließende bzw. einfassende Kantenschutzlippe tritt jedoch bevorzugt nur dann ein, wenn ein Gegenstand enthaltend die Kante, z.B. eine Kraftfahrzeugtür, eine öffnende Bewegung vollzieht. Die Kantenschutzlippe befindet sich in dieser Ausführungsform nur temporär um die zu schützende Kante gelegt. Ein temporärer Kantenschutz im Sinne der vorliegenden Erfindung bedeutet also nicht, dass dieser in seiner Gesamtheit zeitlich begrenzt eingesetzt werden soll. Vielmehr zeichnet sich der erfindungsgemäße Kantenschutz insbesondere auch dadurch aus, dass er, sobald er einmal an der Tür angebracht ist, bis zu seinem endgültigen Verschleiß dauerhaft eingesetzt werden kann.

Ein "verfahrbarer Kantenschutz" im Sinne der vorliegenden Erfindung beschreibt einen Kantenschutz der so ausgestaltet ist, dass durch Druck auf einen bestimmten Punkt wie der Hebeleinheit, der Zugabschnitt automatisch in Richtung der Vorderseite des Anlageabschnitts gedrückt wird und die mit dem Zugabschnitt in Kontakt stehende Kantenschutzlippe sich von einer zu schützenden Kante gleichzeitig automatisch wegbewegt, was in einer geeigneten Ausführungsform durch die Verwendung von gummielastischem Material ermöglich werden kann. Verfahrbar im Sinne der vorliegenden Erfindung beschreibt also die rein kinematische Bewegung, wobei das vorliegende System regelmäßig ohne eine zusätzliche Mechanik, wie beispielsweise eine Feder auskommt.

In einer zweckmäßigen Ausgestaltung des erfindungsgemäßen Kantenschutzes weist der Anlageabschnitt vorderseitig im Bereich entfernt von der Kantenschutzlippe eine Auswölbung auf. Es hat sich ebenfalls als vorteilhaft gezeigt, wenn der Anlageabschnitt einen ersten und einen zweiten Schenkel umfasst, die, insbesondere bei gattungsgemäßer Verwendung, in einem, insbesondere stumpfen, Winkel zueinander angeordnet sind. Die meisten Fahrzeugtüren weisen in ihrem Innenbereich einen eben solchen stumpfen Winkel auf, sodass sich der erfindungsgemäße Kantenschutz einfach am Innenbereich über den Anlageabschnitt anbringen lässt. Je nach Fahrzeugmodell und insbesondere im Falle eines serienmäßigen Einbaus durch den Hersteller sind jedoch auch alternative Geometrien denkbar. Insbesondere auch bei Verwendung bzw. teilweiser Verwendung von gummielastischem Material kann der der erfindungsgemäße Kantenschutz aufgrund seines elastischen Verhaltens in einer Vielzahl von Fahrzeugen eingebaut werden.

Weiterhin ist ein solcher erfindungsgemäßer Kantenschutz besonders gut geeignet, bei dem der erste Schenkel in das Verlängerungsstück übergeht. Alternativ oder zusätzlich kann die Auswölbung vorderseitig an dem zweiten Schenkel vorliegen. Ebenfalls ist es zweckmäßig, wenn das Hebelelement dreh- bzw. kippbar an der Vorderseite des Anlageabschnitts mit diesem verbunden vorliegt. Es ist ebenfalls denkbar, dass das Hebelelement dreh- bzw. kippbar an der Auswölbung vorliegt. In jedem Fall ist es bevorzugt, dass das Hebelelement einstückig verbunden mit dem Anlageabschnitt bzw. der Auswölbung verbunden vorliegt. Zum einen ist ein einstückiges System einfacher und kostengünstiger herzustellen, zum anderen lässt sich dieses so besonders einfach, insbesondere auch nachträglich, von einem Fahrzeugnutzer einsetzen.

Es hat sich außerdem als vorteilhaft erwiesen, wenn das Hebelelement einen Hebelbalken mit einem ersten und einem gegenüberliegenden zweiten Ende umfasst, der mit seinem ersten Ende dreh- bzw. kippbar an der Vorderseite des Anlageabschnitts oder an der Auswölbung mit diesem bzw. dieser verbunden vorliegt. Auch hierbei sind solche Ausführungsformen bevorzugt, bei denen die Verbindung zwischen Hebelelement und Anlageabschnitt bzw. Auswölbung einstückig ausgebildet sind. Es ist dabei besonders zweckmäßig, dass der Hebelarm mit derjenigen Seite des Hebebalkens verbunden ist, die der Kantenschutzlippe und/oder dem Zugabschnitt bei gattungsgemäßer Verwendung zugewandt oder zuwendbar ist.

Weiterhin ist es vorteilhaft, dass der zweite Endabschnitt des Zugabschnitts gebogen vorliegt und zwar in der Art, dass die Biegung des zweiten Endabschnitts von der Vorderseite des Anlageabschnitts weg weist. Es hat sich gezeigt, dass hakenförmige Biegungen dabei besonders gut geeignet sind.

Insbesondere bei der Ausführungsform eines einstückigen erfindungsgemäßen Kantenschutzes hat es sich als zweckmäßig erwiesen, wenn im Übergang von dem Verlängerungsstück zu dem Anlageabschnitt, im Übergang von dem Verlängerungsstück zu dem Zugabschnitt, im Übergang von dem Zugabschnitt, insbesondere dem gebogen vorliegenden zweiten Endabschnitt des Zugabschnitts, zu dem Hebelarm und/oder, vorzugsweise und, im Übergang von der Hebeleinheit, insbesondere dem Hebelbalken, zu der Vorderseite des Anlageabschnitts oder zu der Auswölbung Materialverjüngungen vorliegen. Die Dünnwandigkeit an eben diesen Übergangsstellen führt zu einer erhöhten Elastizität des Kantenschutzes und ermöglicht eine verbesserte Rückstellung. Beim Öffnen der Fahrzeugtür geht der Kantenschutz aus einer gedrückten Position so besonders gut in die entspannte Ausgangsposition über. Dabei üben die genannten Übergänge eine Art Scharnierfunktion aus, fungieren also als elastisch drehbare Gelenke, ohne jedoch auf klassische Scharniere rückgreifen zu müssen. Dies wird zum einen durch die Materialverjüngungen, zum anderen durch die einstückige Ausbildung des Kantenschutzes und gegebenenfalls auch durch die partielle oder komplette Verwendung eines gummielastischen Materials ermöglicht.

In einer bevorzugten Ausführungsform kann vorgesehen sein, dass der Hebelbalken über einen ersten Querbalken mit dem zweiten Endabschnitt des Zugabschnitts verbunden ist. Alternativ oder zusätzlich kann vorgesehen sein, dass der Anlageabschnitt und die Auswölbung über einen zweiten Querbalken verbunden sind. Dies sorgt für eine nochmals verbesserte Stabilität des Türkantenschutzes, insbesondere bei großen Querschnittsflächen. Hierbei bilden in einer bevorzugten Ausführungsform der zweite Schenkel des Anlageabschnitts und der zweite Querbalken, insbesondere die dem Verbindungsabschnitt abgewandte Seite des zweiten Querbalkens, einen spitzen Winkel aus. Mit dem Vorsehen von erstem oder zweitem Querbalken wurde überraschend gefunden, dass beim Zuschlagen einer mit dem erfindungsgemäßen Türkantenschutz ausgestatteten Tür, insbesondere Kfz-Tür, der Übergang dieser Tür zu einer benachbarten Tür oder einem benachbarten weiteren Karosserieteil im geschlossenen Zustand stets bündig ist, d.h. eine ebene Bauteilfläche im Bereich des Türspalts erhalten wird bzw. bleibt, und zwar insbesondere auch noch nach mehreren zehntausend Auf- und Zuschlagvorgängen. Insbesondere auch bei Einsatz des erfindungsgemäßen Türkantenschutz, der mit dem ersten oder zweiten Querbalken ausgestattet ist, können vorgegebene Spaltmaße der Türen zu anderen Türen und/oder weiteren Karosserieteilen besonderes gut auch noch nach einer großen Anzahl von Auf- und Zuschlagvorgängen eingehaltenen werden.

Zur Befestigung des erfindungsgemäßen Kantenschutzes an dem Innenbereich einer Tür hat es sich als besonders geeignet erwiesen, wenn der Anlageabschnitt rückseitig mindestens zwei, insbesondere mindestens drei, Anlagepunkte aufweist. Diese dienen dazu, den Kantenschutz an der Innenkante, insbesondere einer Türinnenkante, und besonders bevorzugt an einer Fahrzeugtürinnenkante, mit einem Befestigungsmittel zu befestigen. Die Befestigungsmittel können dabei Einrastvorrichtungen, Schraubsysteme, Haftsysteme oder jegliche alternativen Befestigungsvorrichtungen umfassen. Bevorzugt sind dabei solche Systeme, die sich zerstörungsfrei von der Türinnenkante lösen lassen. Insbesondere für die Nachrüstung von Türen mit einem erfindungsgemäßen Kantenschutz haben sich Haftsysteme als besonders geeignet erwiesen. Besonders vorteilhaft sind doppelseitig haftende Systeme, wie doppelseitige Klebebänder, welche sowohl einfach lösbar an der Türinnenkante, als auch an dem Kantenschutz selbst befestigt werden können. Es hat sich als besonders zweckmäßig erwiesen, wenn diese Klebebänder direkt auf die Türinnenkante bzw. auf den Kantenschutz aufgebracht werden können, vorzugsweise ohne die Verwendung eines Primers.

Um eine besonders stabile Verbindung des Befestigungsmittels in Form des doppelseitig haftenden Systems, wie doppelseitige Klebebänder, mit der Rückseite des Anlageabschnitts zu erhalten, hat es sich als vorteilhaft erwiesen, dass man die Rückseite des Anlageabschnitts zumindest bereichsweise vor dem Inkontaktbringen mit einer der Klebeseiten des doppelseitigen Haftsystems bzw. Klebebandes einer Plasmabehandlung unterzieht. Hierbei kann in einer besonders zweckmäßigen Ausführungsform vorgesehen sein, dass man diese Plasmabehandlung in Gegenwart mindestens eines Gases wie Sauerstoff, Stickstoff, Kohlendioxid, Wasserstoff, Kohlenmonoxid, Wasserstoffperoxidgas, Wasserdampf, Ozon und/oder Luft vornimmt. In besonders zweckmäßigen Ausführungsformen wird auf Luft oder Sauerstoff als Gas für die Plasmabehandlung zurückgegriffen. Die vorangehend geschilderte Plasmabehandlung kommt insbesondere bei solchen Anlageabschnitten oder erfindungsgemäßen Kantenschutzen zum Einsatz, die aus gummielastischem Material, insbesondere auf Basis von Silikonkautschuken, gebildet sind oder gummielastisches Material, insbesondere auf Basis von Silikonkautschuken, umfassen. In einer weiteren bevorzugten Ausgestaltung wird für das doppelseitig haftende System, insbesondere das doppelseitige Klebeband, auf solche mit Klebern auf Acrylat-, insbesondere Reinacrylatbasis zurückgegriffen. Bevorzugt kommt dabei für diejenige Seite des doppelseitig haftenden Systems, insbesondere des doppelseitigen Klebebands, die mit dem plasmabehandelten Anlageabschnitt verbunden wird, ein Kleber auf Acrylat-, insbesondere Reinacrylatbasis zum Einsatz.

Auch im Hinblick auf einen verbesserten Halt des Kantenschutzes in der Türinnenkante hat es sich weiterhin als zweckmäßig gezeigt, wenn die Vorderseite und die Rückseite des Anlagenabschnitts überwiegend im Wesentlichen parallel zueinander verlaufen. Solch eine Ausgestaltungsform sorgt auch dafür, dass der Kantenschutz sogar bei geöffneter Tür nicht als optisch störend empfunden wird, sondern sich durch die an dieser Stelle kantige Ausgestaltung gut in das Gesamtbild einfügt.

Für eine bessere Flexibilität des Kantenschutzes und auch zur Unterstützung der Scharnierfunktionen der materialverjüngenden Übergänge hat es sich als vorteilhaft erwiesen, wenn die Auswölbung einen Hohlraum, auch erster Hohlraum genannt, umfasst bzw. umschreibt. Ein solcher Hohlraum liegt auch schon dann vor, wenn der durch die Auswölbung und den Anlageabschnitt umgrenzte Raum jenseits von Auswölbung und Anlageabschnitt ein- oder beidseitig offen ausgebildet ist. Dabei kann die dabei zum Einsatz kommende Auswölbung an einer oder an mehreren Stellen ebenfalls Materialverjüngungen aufweisen. Alternativ ist es auch möglich, dass die Auswölbung geschäumtes oder geblähtes Material enthält.

In einer besonders geeigneten Ausführungsformen des erfindungsgemäßen Kantenschutzes bilden das Verlängerungsstück, der Anlageabschnitt, der Zugabschnitt und das Hebelelement, insbesondere der Hebelarm, sowie gegebenenfalls die Auswölbung einen zweiten Hohlraum aus. D.h. das Verlängerungsstück, der Anlageabschnitt, der Zugabschnitt und das Hebelelement, insbesondere der Hebelarm, sowie gegebenenfalls die Auswölbung umgrenzen bzw. umschließen einen Raum. Dieser Raum ist vorzugsweise ein- oder beidseitig offen ausgebildet. Im Falle der Ausführungsformen mit zwei Hohlräumen ist es zweckmä-βig, wenn die beiden Hohlräume getrennt voneinander vorliegen, also die Auswölbung einen zusätzlichen Verbindungsabschnitt, insbesondere als Steg ausgebildet, aufweist. Alternativ oder zusätzlich kann vorgesehen sein, dass der Hebelarm, der Hebelbalken und der erste Querbalken einen dritten Hohlraum umschließen und/oder dass der erste Querbalken, der Anlageabschnitt, der Verbindungsabschnitt, der Zugabschnitt und der Hebelarm einen vierten Hohlraum bilden und/oder dass in dem ersten Hohlraum ein zweiter Querbalken vorliegt, der die Vorderseite des Anlageabschnitts und die Auswölbung verbindet, wobei vorzugsweise eine Zweiteilung des ersten Hohlraums einen ersten und einen zweiten Teilhohlraum erfolgt. Dabei ist der zweite Hohlraum ausgelegt und eingerichtet, durch Druck auf die Hebeleinheit, insbesondere den Hebelbalken, beim Schließen der Tür die Hebeleinheit und Teile des Zugabschnitts aufzunehmen, wobei gleichzeitig die Kantenschutzlippe in Richtung der Rückseite des Anlageabschnitts und/oder in Richtung der Auswölbung bewegbar ist.

Der erfindungsgemäße Kantenschutzes kann grundsätzlich gummielastisches Material, aber auch Thermoplasten umfassen oder aus beiden Materialien aufgebaut sein. Thermoplasten bieten den Vorteil, dass sie sich grundsätzlich besser recyceln lassen, indem sie einfach eingeschmolzen und neu verarbeitet werden können. Gummielastisches Material bietet aufgrund seiner Flexibilität den Vorteil, dass es sich beim Einbau in die Türinnenkante besser an diese anschmiegt und auch eine bessere Rückstellung in dem erfindungsgemäßen Kantenschutz insbesondere beim Öffnen der Fahrzeugtür ermöglicht. Grundsätzlich sind auch Mehrkomponenten-Systeme für den erfindungsgemäßen Türkantenschutz denkbar, insbesondere wobei die Übergänge in Form der Materialverjüngungen aus gummielastischem Material und beispielsweise die Auswölbung, das Hebelelement und der Zugabschnitt aus thermoplastischem Material gebildet sein können. In zweckmäßigen Ausgestaltungen ist der erfindungsgemäße Kantenschutz jedoch nur aus einem Material aufgebaut, was eine kostengünstigere und einfachere Herstellung erlaubt. Bevorzugt umfasst oder besteht der erfindungsgemäße Kantenschutz aus gummielastischem Material, welches insbesondere in Kombination mit den Übergangen in Form der Materialverjüngungen ein besonders flexibles und dennoch robustes Schutzelement sowohl für den serienmäßigen Einbau als auch eine Nachrüstung durch den Fahrzeugnutzer liefert.

Grundsätzlich kann dabei mit dem erfindungsgemäßen Kantenschutz vorgesehen sein, dass die Kantenschutzlippe, der Hebelarm und/oder der Hebelbalken, insbesondere das Hebelelement, das Verlängerungsstück, der Anlageabschnitt, der Zugabschnitt, die Auswölbung, der Übergang von dem Verlängerungsstück zu dem Anlageabschnitt, der Übergang von dem Verlängerungsstück zu dem Zugabschnitt, der Übergang von dem Zugabschnitt, insbesondere dem gebogen vorliegenden zweiten Endabschnitt des Zugabschnitts, zu dem Hebelarm und/oder, insbesondere und, der Übergang von der Hebeleinheit, insbesondere dem Hebelbalken, zu der Vorderseite des Anlageabschnitts oder zu der Auswölbung, insbesondere der erste Querbalken und/oder, insbesondere und, der zweite Querbalken, insbesondere der Kantenschutz, gummielastisches Material und/oder thermoplastisches Material, insbesondere gummielastisches Material, umfassen oder hieraus gebildet sind.

Dabei ist in einer besonders geeigneten Ausführungsform vorgesehen, dass der Übergang von dem Verlängerungsstück zu dem Anlageabschnitt, der Übergang von dem Verlängerungsstück zu dem Zugabschnitt, der Übergang von dem Zugabschnitt, insbesondere dem gebogen vorliegenden zweiten Endabschnitt des Zugabschnitts, zu dem Hebelarm und/oder, insbesondere und, der Übergang von der Hebeleinheit, insbesondere dem Hebelbalken, zu der Vorderseite des Anlageabschnitts oder zu der Auswölbung, die Kantenschutzlippe, der Hebelarm und/oder der Hebelbalken, insbesondere das Hebelelement, der Anlageabschnitt und/oder die Auswölbung, insbesondere der Anlageabschnitt einschließlich die Auswölbung, das Verlängerungsstück und/oder, insbesondere und, der Zugabschnitt, insbesondere der erste Querbalken und/oder, insbesondere und, der zweite Querbalken, gummielastisches Material umfassen oder hieraus gebildet sind.

In zweckmäßigen Ausgestaltungen des erfindungsgemäßen Kantenschutzes basiert das gummielastische Material auf Silikonkautschuken, Naturkautschuken, Butadien-Kautschuken, Styrol-Butadien-Kautschuken, Acrylnitril-Butadien-Kautschuken, Butylkautschuken, Ethylen-Propylen-Dien-Kautschuken, Chloropren-Kautschuken, Polyisopren-Kautschuken oder thermoplastischen Elastomeren. Besonders bevorzugt sind dabei Silikonkautschuke, wobei die sowohl kaltvernetzende (RTV) Silikonkautschuke, heißvernetzende (HTV) Silikonkautschuke oder Flüssigsilikon-Kautschuke umfassen können. Besonders gut geeignet sind heißvernetzende (HTV) Silikonkautschuke, insbesondere auch aufgrund ihrer Wärmebeständigkeit über einen weiten Temperaturbereich, sodass es sowohl im Winter bei Minusgraden als auch im Sommer bei großer Sonneneinstrahlung nicht zu Verformungen des Materials kommt und eine einwandfreie Funktionsfähigkeit stets gewährleistet ist. Weiterhin behalten solche heißvernetzende (HTV) Silikonkautschuke ihre Elastizität auch über einen langen Zeitraum bei, ohne dabei, insbesondere durch UV-Einstrahlung, porös zu werden, was zu einer hohen Langlebigkeit des Materials führt. Dabei umfassen geeignete heißvernetzende (HTV) Silikonkautschuke Polydimethylsiloxane, Polydimethylsiloxane, bei denen die Methylgruppen zum Teil oder vollständig durch Vinylgruppen ersetzt sind (VMQ), Polydimethylsiloxane, bei denen die Methylgruppen zum Teil oder vollständig durch Phenylgruppen ersetzt sind (PVMQ), oder Polydimethylsiloxane, bei denen die Methylgruppen zum Teil oder vollständig durch Fluorsubstituenten ersetzt sind (FVMQ), wobei sich Polydimethylsiloxane, bei denen die Methylgruppen zum Teil oder vollständig durch Vinylgruppen ersetzt sind (VMQ), als besonders gut geeignet erwiesen haben.

In geeigneten Ausgestaltungen des erfindungsgemäßen Kantenschutzes sind die thermoplastischen Elastomere ausgewählt aus der Gruppe bestehend aus thermoplastischen Polyamidelastomeren, thermoplastischen Copolyesterelastomeren, thermoplastischen Elastomeren auf Olefinbasis, insbesondere PP/EPDM-thermoplastische Elastomere, thermoplastische Styrol-Blockcopolymeren, insbesondere SBS-, SEBS-, SEPS-, SEEPS- oder MBS-Blockcopolymeren, thermoplastischen Elastomeren auf Urethanbasis, vernetzten thermoplastischen Elastomeren auf Olefinbasis, insbesondere vernetzte PP/EPDM-thermoplastische Elastomere, und deren beliebige Mischungen.

Man erhält die erfindungsgemäßen Systeme beispielsweise mittels Spritzgießens, Formpressens, Resin Transfer Molding, Gießens oder Extrusion, insbesondere gekoppelt mit einer Salzbadvulkanisation. Um die bevorzugten heißvernetzenden (HTV) Silikonkautschuke zu dem erfindungsgemäßen Kantenschutz zu verarbeiten, wird bevorzugt auf die Heißvulkanisation im Kompressionsverfahren (CM-Verfahren), im Transferverfahren (TM-Verfahren), im Injektionsverfahren (IM-Verfahren) oder im Injektions-/Transferverfahren zurückgegriffen. Darüber hinaus kann für die Heißvulkanisation auch auf Extrusionsverfahren, insbesondere für die Herstellung von (Endlos)-Profilen, auf Gießverfahren oder auf Spritzgießverfahren zurückgegriffen werden.

Die der Erfindung zugrunde liegende Aufgabe wird weiterhin gelöst durch die Verwendung des erfindungsgemäßen Kantenschutzes für den temporären Schutz einer Türkante, insbesondere einer Fahrzeugtürkante. Durch die Verwendung können Lackschäden oder Kratzer an Türen vermieden werden und insbesondere bei der Verwendung bei Glastüren kann ein Glasbruch verhindert werden. Im Bereich von Kraftfahrzeugen kann die Verwendung des erfindungsgemäßen Kantenschutzes dem Fahrzeugführer bei Anbringung an der Vordertür das Aussteigen erleichtern. Die Verwendung ist aber auch für den temporären Schutz der Beifahrertür oder den Hintertüren geeignet, insbesondere bei Kindern, die als Mitfahrer oftmals zum Aussteigen unbedacht die Tür öffnen, ohne auf mögliche Nachbarfahrzeuge oder sonstige Hindernisse zu achten. Neben dem Schutz der eigenen Tür, insbesondere den eigenen Fahrzeugtüren ermöglicht die Verwendung des erfindungsgemäßen Türkantenschutzes auch den Schutz von Nachbarfahrzeugen, insbesondere bei in Reihe parkenden Fahrzeugen wie beispielsweise in Tiefgaragen, aber auch den Schutz sonstiger Gegenstände, die bei einem eventuellen Zusammenstoß mit der Türkante in Kontakt kommen können.

Die der Erfindung zugrunde liegende Aufgabe wird ebenfalls gelöst durch ein Kit-of-parts, umfassend den erfindungsgemäßen Kantenschutz und ein oder mehrere Befestigungsmittel, insbesondere zur Anbringung an die Rückseite des Anlageabschnitts. Auch hierbei können die Befestigungsmittel Einrastvorrichtungen, Schraubsysteme, Haftsysteme oder jegliche alternativen Befestigungsvorrichtungen umfassen, wobei Haftsysteme, insbesondere doppelseitige Klebebänder, aufgrund der einfachen lösbaren Anbringung, insbesondere beim Nachrüsten, bevorzugt sind.

Ferner wird die Aufgabe gelöst durch eine Tür, insbesondere eine Kraftfahrzeugtür, umfassend mindestens einen erfindungsgemäßen Kantenschutz, sowie ein Kraftfahrzeug umfassend eine Tür mit einem erfindungsgemäßen Kantenschutz.

Mit dem erfindungsgemäßen, insbesondere temporären, Kantenschutz, insbesondere für Kraftfahrzeugtüren, dem erfindungsgemäßen Kit-of-parts, umfassend den erfindungsgemäßen Kantenschutz und ein oder mehrere Befestigungsmittel, sowie der Kraftfahrzeugtür umfassend mindestens einen erfindungsgemäßen Kantenschutz und ein Fahrzeug ausgestattet mit eben solch einer Tür geht die überraschende Erkenntnis einher, dass ein dauerhaft angebrachter Kantenschutz bereitgestellt werden kann, der jedoch nur temporär seine Funktion bei geöffneter Tür ausübt, also in geschlossenem Zustand der Tür, insbesondere der Fahrzeugtür, von außen nicht sichtbar ist und keinen störenden optischen Eindruck hinterlässt. Weiterhin ist der erfindungsgemäße Kantenschutz, insbesondere aus gummielastischem Material, einfach und kostengünstig herzustellen, insbesondere auch in großer Stückzahl. Insbesondere auch die Elastizität des Materials, insbesondere der variable biegsame Bereich des Anlageabschnitts, sorgt dafür, dass der Kantenschutz in einer Vielzahl von Fahrzeugmodellen eingesetzt werden kann. Das bevorzugt verwendete gummielastische Material des Kantenschutzes zeichnet sich durch seine Langlebigkeit, seine Temperaturbeständigkeit bei tiefen Minus-Temperaturen aber auch bei Sonnenhitze, seiner UV-Beständigkeit und seiner Resistenz gegenüber Feuchtigkeit, wie beispielsweise bei Witterung oder in Autowaschanlagen, aus. Weiterhin kann der erfindungsgemäße Kantenschutz sowohl serienmäßig vom Hersteller verbaut werden, aber auch nachträglich vom Fahrzeugnutzer selbst, insbesondere aufgrund der lösbaren Befestigungsmittel in Form von Klebebändern, angebracht werden.

Weitere Merkmale und Vorteile der Erfindung ergeben sich aus der nachfolgenden Beschreibung, in der Ausführungsbeispiele der Erfindung anhand von schematischen Zeichnungen beispielhaft erläutert werden, ohne dadurch die Erfindung zu beschränken. Dabei zeigen
- Figur 1: eine Querschnittsansicht einer ersten Ausführungsvariante eines erfindungsgemäßen Türkantenschutzes,
- Figur 2: eine Querschnittsansicht einer zweiten Ausführungsvariante eines erfindungsgemäßen Türkantenschutzes,
- Figur 3: eine Querschnittsansicht einer Tür im offenen Zustand mit einem erfindungsgemäßen Türkantenschutz nach Figur 1,
- Figur 4: eine Querschnittsansicht einer Tür im geschlossenen Zustand mit einem erfindungsgemäßen Türkantenschutz nach Figur 1,
- Figur 5: eine Querschnittsansicht einer dritten Ausführungsvariante eines erfindungsgemäßen Türkantenschutzes,
- Figur 6: eine Querschnittsansicht einer vierten Ausführungsvariante eines erfindungsgemäßen Türkantenschutzes und
- Figur 7: eine Querschnittsansicht einer fünften Ausführungsvariante eines erfindungsgemäßen Türkantenschutzes.

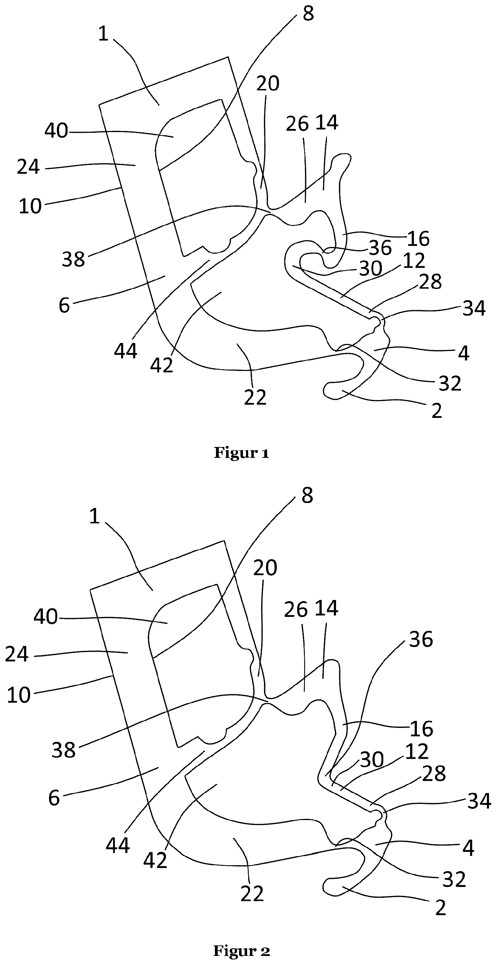

Figur 1 zeigt eine Querschnittsansicht eines erfindungsgemäßen, insbesondere temporären, Türkantenschutzes 1 mit einer verfahrbaren Kantenschutzlippe 2 mit einem Lippenende und einem Lippenanfang, einem im Bereich des Lippenendes der Kantenschutzlippe 2 verlängernden Verlängerungsstück 4, einem Anlageabschnitt 6 mit einer Vorderseite 8 und einer Rückseite 10, einem Zugabschnitt 12 mit einem ersten Endabschnitt 28 und einem gegenüberliegenden zweiten Endabschnitt 30, sowie einem Hebelelement 14 mit einem Hebelarm 16, wobei der Anlageabschnitt 6, das Verlängerungsstück 4 und der Zugabschnitt 12 in der gezeigten Ausführungsform einstückig miteinander verbunden vorliegen. Der Hebelarm 16 liegt einstückig mit dem zweiten Endabschnitt 30 des Zugabschnitts 12 vor, wobei durch Einwirkung auf den Hebelarm 16 der Abstand des zweiten Endabschnitts 30 des Zugabschnitts 12 zu der Vorderseite 8 des Anlageabschnitts 6 verringerbar ist, wobei sich gleichzeitig die Kantenschutzlippe 2 von einer zu schützenden Kante 18 wegbewegt (in Figur 1 nicht gezeigt). Weiterhin weist der Anlageabschnitt 6 vorderseitig im Bereich entfernt von der Kantenschutzlippe 2 eine Auswölbung 20 auf und bildet in der gezeigten Ausführungsform einen ersten Hohlraum 40 aus. Dieser zeigt hierbei weitere Materialverjüngungen auf, welche zu einer verbesserten Elastizität und einer verbesserten Rückstellkraft führen. Weiterhin weist der Anlageabschnitt 6 einen ersten Schenkel 22 und einen sich dazu im stumpfen Winkel angeordneten zweiten Schenkel 24. In der gezeigten Ausführungsform mündet die Auswölbung 20 in einen Verbindungsabschnitt 44 der den ersten Hohlraum 40 von einem zweiten Hohlraum 42 trennt. Im Übergang 32 von dem Verlängerungsstück 4 zu dem Anlageabschnitt 6, im Übergang 34 von dem Verlängerungsstück 4 zu dem Zugabschnitt 12, im Übergang 36 von dem gebogen vorliegenden zweiten Endabschnitt 30 des Zugabschnitts 12 zu dem Hebelarm 16 und im Übergang 38 von dem Hebelbalken 26 der Hebeleinheit 14 zu der Auswölbung 20 liegen Materialverjüngungen vor, welche der Elastizität des Türkantenschutzes 1 dienen und für eine verbesserte Rückstellkraft von der gebogenen in die entspannte Position des Türkantenschutzes 1 sorgen.

Figur 2 zeigt eine Querschnittsansicht einer zweiten alternativen Ausführungsvariante eines erfindungsgemäßen Türkantenschutzes 1, welche sich von der in der Figur 1 gezeigten dadurch unterscheidet, dass der Hebelarm 16 der Hebeleinheit 14 nahezu rechtwinklig in den Zugabschnitt 12 übergeht, ohne dass im Übergang 36 eine Materialverjüngung vorliegt. Diese zweite Ausführungsvariante ist deutlich einfacher als die in der Figur 1 gezeigten ausgestaltet und lässt sich insbesondere in der Serienfertigung einfacher herstellen.

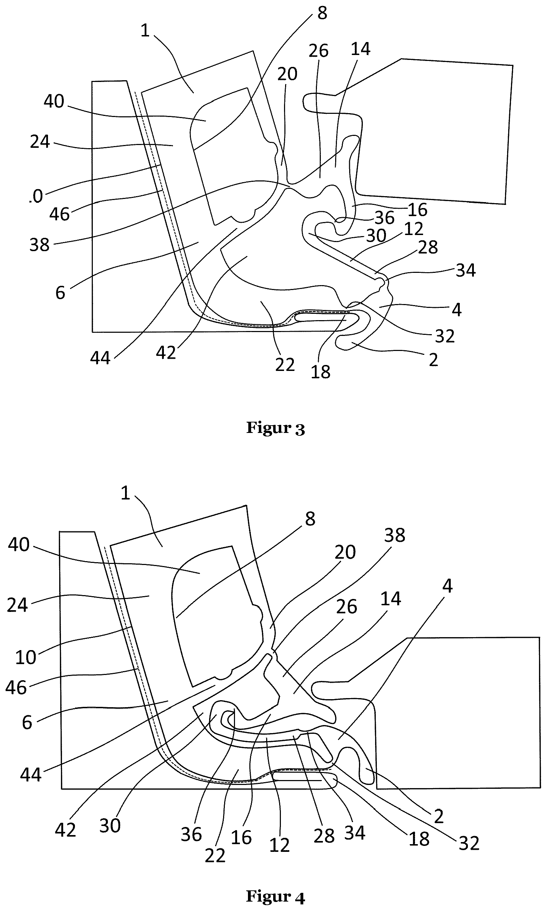

Figur 3 zeigt den in Figur 1 gezeigten Türkantenschutz, der befestigt über ein Befestigungselement 46 in Form eines doppelseitigen Klebebands (gestrichelte Linie) in einer Kraftfahrzeugtür im offenen Zustand vorliegt. Dabei nimmt der Türkantenschutz eine entspannte Position ein.

Figur 4 zeigt den bereits in Figur 3 gezeigten befestigten erfindungsgemäßen Türkantenschutz aus Figur 1, wobei sich die Kraftfahrzeugtür hier in einer geschlossenen Position befindet.

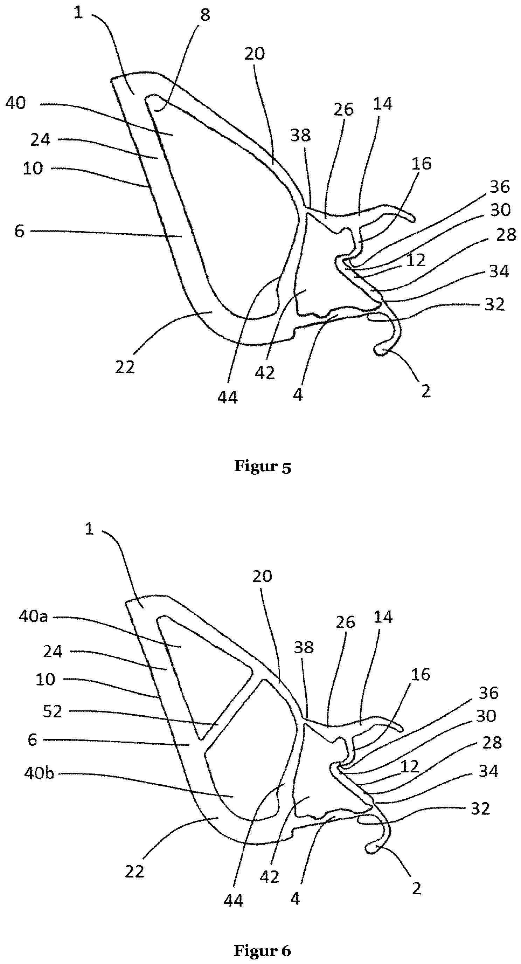

Figur 5 zeigt eine Querschnittsansicht einer dritten alternativen Ausführungsvariante des erfindungsgemäßen Türkantenschutzes (1), welche sich von der in der Figur 1 gezeigten dadurch unterscheidet, dass der Verbindungsabschnitt (44) der Auswölbung (20) auf dem ersten Schenkel (22) des Anlageabschnitts (6) endet. Ferner hat der zwischen Hebelbalken (26) und dem Hebelarm (16) herausragende Fortsatz des Hebelelements (14) eine Orientierung in Richtung des ersten Schenkels (22) des Anlageabschnitts (6).

Figur 6 zeigt eine Querschnittsansicht einer vierten alternativen Ausführungsvariante des erfindungsgemäßen Türkantenschutzes (1), welche sich von der in der Figur 5 gezeigten dadurch unterscheidet, dass in dem ersten Hohlraum (40) ein zweiter Querbalken (52) vorliegt, der die Vorderseite (8) des Anlageabschnitts (6) und die Auswölbung (20) verbindet, wobei vorzugsweise eine Zweiteilung des ersten Hohlraums (40) in einen ersten Teilhohlraum (40a) und einen zweiten Teilhohlraum (40b) erfolgt. In der dargestellten bevorzugten Ausführungsform bilden der zweite Schenkel (24) des Anlageabschnitts (6) und der zweite Querbalken (52) einen spitzen Winkel aus. Dies trägt insbesondere auch dazu bei, dass eine Tür, insbesondere Fahrzueugtür, beim Zuschlagen außenseitig stets flächenbündig schließt. Auch sind der zweite Querbalken (52) und die der Auswölbung (20) in der dargestellten Ausführungsform im Wesentlichen senkrecht zueinander ausgerichtet.

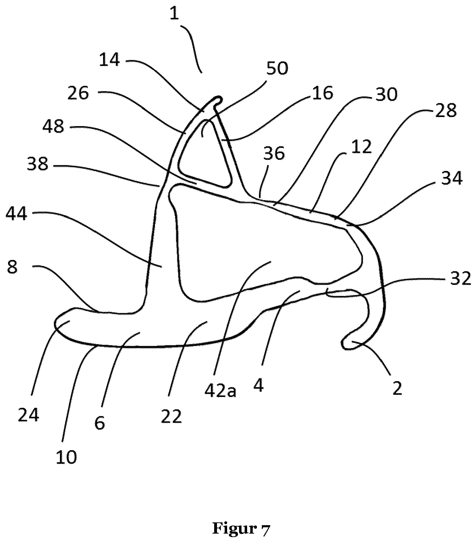

Figur 7 zeigt eine Querschnittsansicht einer fünften alternativen Ausführungsvariante eines erfindungsgemäßen Türkantenschutzes (1), welche sich von der in der Figur 1 gezeigten dadurch unterscheidet, dass keine Auswölbung (20) vorliegt und kein Hohlraum (40) und der zweite Schenkel (24) des Anlageabschnitts (6) nur stumpfartig ausgebildet ist. Ferner zeichnet sich die vierte alternative Ausführungsvariante in einer zweckmäßigen Ausführungsform dadurch aus, dass der Hebelarm (16), der Hebelbalken (26) und der erste Querbalken (48) einen dritten Hohlraum (50) umschließen und dass der erste Querbalken (48), der Anlageabschnitt (6), der Verbindungsabschnitt (44), der Zugabschnitt (12) und der Hebelarm (16) einen vierten Hohlraum (42a) bilden.

Beim Schließen der Kraftfahrzeugtür, also dem Bewegen der Kraftfahrzeugtür zur Karosserie hin, wird der Hebelarm 16 in Richtung des Zugabschnitts 12 gedrückt, wobei die Übergänge 38 und 36 (hier in Form von Materialverjüngungen) als Scharniere wirken, wodurch der Bereich des Hebelelements 14 in den zweiten Hohlraum 42 gedrückt wird. Durch die einstückigen Verbindungen zwischen dem Zugabschnitt 12 und dem Verlängerungsstück 4, sowie dem Verlängerungsstück 4 und der Kantenschutzlippe 2 wird diese Kantenschutzlippe 2 gleichzeitig von der zu schützenden Kante 18 der Kraftfahrzeugtür wegbewegt. Im geschlossenen Zustand der Kraftfahrzeugtür ist die Kantenschutzlippe 2 von außen nicht zu sehen, sodass es zu keinem störenden optischen Eindruck kommt.

Die in der vorstehenden Beschreibung, in den Ansprüchen und den Zeichnungen offenbarten Merkmale der Erfindung können sowohl einzeln aus auch in jeder beliebigen Kombination für die Verwirklichung der Erfindung in ihren verschiedenen Ausführungsformen wesentlich sein.

### Bezugszeichen

- 1: Kantenschutz
- 2: Kantenschutzlippe
- 4: Verlängerungsstück
- 6: Anlageabschnitt
- 8: Vorderseite des Anlageabschnitts
- 10: Rückseite des Anlageabschnitts
- 12: Zugabschnitt
- 14: Hebelelement
- 16: Hebelarm
- 18: zu schützende Kante
- 20: Auswölbung
- 22: erster Schenkel des Anlageabschnitts
- 24: zweiter Schenkel des Anlageabschnitts
- 26: Hebebalken
- 28: erster Endabschnitt des Zugabschnitts
- 30: zweiter Endabschnitt des Zugabschnitts
- 32: Übergang von Verlängerungsstück (4) in Anlageabschnitt (6)
- 34: Übergang von Verlängerungsstück (4) in Zugabschnitt (12)
- 36: Übergang von Zugabschnitt (12) zu Hebelarm (16)
- 38: Übergang von Hebeleinheit (14) zu Hebelbalken (26)
- 40: erster Hohlraum
- 40a: erster Teilhohlraum
- 40b: zweiter Teilhohlraum
- 42: zweiter Hohlraum
- 42a: vierter Hohlraum
- 44: Verbindungsabschnitt
- 46: Befestigungselement
- 48: erster Querbalken
- 50: dritter Hohlraum
- 52: zweiter Querbalken

## Patentansprüche

1. Kantenschutz (1), insbesondere temporärer Kantenschutz (1), insbesondere für eine Kraftfahrzeugtür mit
- einer verfahrbaren, insbesondere in Richtung einer zu schützenden Kante vorgebogenen, Kantenschutzlippe (2) mit einem Lippenende und einem Lippenanfang,
- einem die Kantenschutzlippe (2) im Bereich des Lippenendes verlängernden Verlängerungsstück (4) mit einem in Bezug auf die Kantenschutzlippe (2) distalen und einem proximalen Ende,
- einem Anlageabschnitt (6) mit einer Vorder- und einer Rückseite (8, 10), eingerichtet und ausgelegt, um mit seiner Rückseite (10) an einer Unterlage, insbesondere einem Kraftfahrzeugtürinnenbereich verbindbar zu sein, der mit dem proximalen Ende des Verlängerungsstücks (4), insbesondere einstückig, verbunden ist,
- einem Zugabschnitt (12) mit einem ersten und einen gegenüberliegenden zweiten Endabschnitt (28, 30), der über seinen ersten Endabschnitt (28) mit dem distalen Ende des Verlängerungsstücks (4), insbesondere einstückig, verbunden ist,
- einem Hebelelement (14) mit einem Hebelarm (16), welcher ausgelegt und eingerichtet ist, um mit dem zweiten Endabschnitt (30) des Zugabschnitts (12), insbesondere miteinander verbunden vorliegend, derart wechselzuwirken, dass der Abstand des zweiten Endabschnitts (30) des Zugabschnitts (12) zu der Vorderseite (8) des Anlageabschnitts (6) unter im Wesentlichen gleichzeitiger Bewegung der Kantenschutzlippe (2) zur mindestens partiellen Freigabe einer zu schützenden Kante (18) verringerbar ist.

2. Kantenschutz (1) nach Anspruch 1, **dadurch gekennzeichnet, dass** der Anlageabschnitt (6) vorderseitig im Bereich entfernt von der Kantenschutzlippe (2) eine Auswölbung (20) aufweist.

3. Kantenschutz (1) nach Anspruch 1 oder 2, **dadurch gekennzeichnet, dass** der Anlageabschnitt (6) einen ersten und einen zweiten Schenkel (22, 24) umfasst, die, insbesondere bei gattungsgemäßer Verwendung, in einem, insbesondere stumpfen, Winkel zueinander angeordnet sind.

4. Kantenschutz (1) nach Anspruch 3, **dadurch gekennzeichnet, dass** der erste Schenkel (22) in das Verlängerungsstück (4) übergeht und/oder dass an dem zweiten Schenkel (24) vorderseitig die Auswölbung (20) vorliegt.

5. Kantenschutz (1) nach einem der vorangehenden Ansprüche, **dadurch gekennzeichnet, dass**
das Hebelelement (14) dreh- bzw. kippbar an der Vorderseite (8) des Anlageabschnitts (6) oder an der Auswölbung (20), insbesondere einstückig, mit diesem bzw. dieser verbunden vorliegt.

6. Kantenschutz (1) nach einem der vorangehenden Ansprüche, **dadurch gekennzeichnet, dass**
das Hebelelement (14) einen Hebelbalken (26) mit einem ersten und einem gegenüberliegenden zweiten Ende umfasst, der mit seinem ersten Ende dreh- bzw. kippbar an der Vorderseite (8) des Anlageabschnitts (6) oder an der Auswölbung (20), insbesondere einstückig, mit diesem bzw. dieser verbunden vorliegt und dass der Hebelarm (16) mit derjenigen Seite des Hebebalkens (26) verbunden ist, die der Kantenschutzlippe (2) und/oder dem Zugabschnitt (12) bei gattungsgemäßer Verwendung zugewandt oder zuwendbar ist.

7. Kantenschutz (1) nach einem der vorangehenden Ansprüche, **dadurch gekennzeichnet, dass**
der zweite Endabschnitt (30) des Zugabschnitts (12), insbesondere hakenförmig, gebogen vorliegt, wobei diese Biegung des zweiten Endabschnitts (30) von der Vorderseite (8) des Anlageabschnitts (6) weg weist.

8. Kantenschutz (1) nach einem der vorangehenden Ansprüche, **dadurch gekennzeichnet, dass**
im Übergang (32) von dem Verlängerungsstück (4) zu dem Anlageabschnitt (6), im Übergang (34) von dem Verlängerungsstück (4) zu dem Zugabschnitt (12), im Übergang (36) von dem Zugabschnitt (12), insbesondere dem gebogen vorliegenden zweiten Endabschnitt (30) des Zugabschnitts (12), zu dem Hebelarm (16) und/oder
im Übergang (38) von der Hebeleinheit (14), insbesondere dem Hebelbalken (26), zu der Vorderseite (8) des Anlageabschnitts (6) oder zu der Auswölbung (20) eine Materialverjüngung vorliegt.

9. Kantenschutz (1) nach einem der vorangehenden Ansprüche, **dadurch gekennzeichnet, dass**
der Übergang (32) von dem Verlängerungsstück (4) zu dem Anlageabschnitt (6), der Übergang (34) von dem Verlängerungsstück (4) zu dem Zugabschnitt (12), der Übergang (36) von dem Zugabschnitt (12), insbesondere dem gebogen vorliegenden zweiten Endabschnitt (30) des Zugabschnitts (12), zu dem Hebelarm (16) und/oder, insbesondere und,
der Übergang (38) von der Hebeleinheit (14), insbesondere dem Hebelbalken (26), zu der Vorderseite (8) des Anlageabschnitts (6) oder zu der Auswölbung (20) ausgelegt und eingerichtet ist, eine Scharnierfunktion auszuüben.

10. Kantenschutz gemäß einem der vorangehenden Ansprüche, **dadurch gekennzeichnet, dass**
der Hebelbalken (26) über einen ersten Querbalken (48) mit dem zweiten Endabschnitt (30) des Zugabschnitts (12) verbunden ist und/oder
dass der Anlageabschnitt (6) und die Auswölbung (20) über einen zweiten Querbalken (52) verbunden sind, wobei vorzugsweise der zweite Schenkel (24) des Anlageabschnitts (6) und der zweite Querbalken (52), insbesondere die dem Verbindungsabschnitt (44) abgewandte Seite des zweiten Querbalkens (52), einen spitzen Winkel bilden.

11. Kantenschutz (1) nach einem der vorangehenden Ansprüche, **dadurch gekennzeichnet, dass**
die Kantenschutzlippe (2), der Hebelarm (16) und/oder der Hebelbalken (26), insbesondere das Hebelelement (14), das Verlängerungsstück (4), der Anlageabschnitt (6), der Zugabschnitt (12), die Auswölbung (20), der Übergang (32) von dem Verlängerungsstück (4) zu dem Anlageabschnitt (6),
der Übergang (34) von dem Verlängerungsstück (4) zu dem Zugabschnitt (12), der Übergang (36) von dem Zugabschnitt (12), insbesondere dem gebogen vorliegenden zweiten Endabschnitt (30) des Zugabschnitts (12), zu dem Hebelarm (16), und/oder, insbesondere und, der Übergang (38) von der Hebeleinheit (14), insbesondere dem Hebelbalken (26), zu der Vorderseite (8) des Anlageabschnitts (6) oder zu der Auswölbung (20), insbesondere der erste Querbalken (48) und/oder, insbesondere und, der zweite Querbalken (52), insbesondere der Kantenschutz (1), gummielastisches Material und/oder thermoplastisches Material, insbesondere gummielastisches Material, umfassen oder hieraus gebildet sind.

12. Kantenschutz (1) nach einem der vorangehenden Ansprüche, **dadurch gekennzeichnet, dass**
der Übergang (32) von dem Verlängerungsstück (4) zu dem Anlageabschnitt (6), der Übergang (34) von dem Verlängerungsstück (4) zu dem Zugabschnitt (12), der Übergang (36) von dem Zugabschnitt (12), insbesondere dem gebogen vorliegenden zweiten Endabschnitt (30) des Zugabschnitts (12), zu dem Hebelarm (16) und/oder, insbesondere und, der Übergang (38) von der Hebeleinheit (14), insbesondere dem Hebelbalken (26), zu der Vorderseite (8) des Anlageabschnitts (6) oder zu der Auswölbung (20) thermoplastisches Material umfassen oder hieraus gebildet sind, wobei vorzugsweise die Kantenschutzlippe (2), der Hebelarm (16) und/oder der Hebelbalken (26), insbesondere das Hebelelement (14), der Anlageabschnitt (6) und/oder die Auswölbung (20), insbesondere der Anlageabschnitt (6) einschließlich die Auswölbung (20), das Verlängerungsstück (4) und/oder, insbesondere und, der Zugabschnitt (12), insbesondere der erste Querbalken (48) und/oder, insbesondere und, der zweite Querbalken (52), gummielastisches Material umfassen oder hieraus gebildet sind.

13. Kantenschutz (1) nach einem der vorangehenden Ansprüche, **dadurch gekennzeichnet, dass**
das Verlängerungsstück (4), der Anlageabschnitt (6), der Zugabschnitt (12) und das Hebelelement (14), insbesondere einschließlich Hebelarm (16), sowie gegebenenfalls die Auswölbung (20) oder jeweils Teile von diesen einen zweiten Hohlraum umschließen.

14. Kantenschutz (1) nach Anspruch 13, **dadurch gekennzeichnet, dass** zwischen dem ersten und zweiten Hohlraum (40, 42) ein Verbindungsabschnittabschnitt (44) der Auswölbung (20) vorliegt und/oder dass der Hebelarm (16), der Hebelbalken (26) und der erste Querbalken (48) einen dritten Hohlraum (50) umschließen und/oder dass
der erste Querbalken (48), der Anlageabschnitt (6), der Verbindungsabschnitt (44), der Zugabschnitt (12) und der Hebelarm (16) einen vierten Hohlraum (42a) bilden und/oder dass
in dem ersten Hohlraum (40) ein zweiter Querbalken (52) vorliegt, der die Vorderseite (8) des Anlageabschnitts (6) und die Auswölbung (20) verbindet, wobei vorzugsweise eine Zweiteilung des ersten Hohlraums (40) in einen ersten Teilhohlraum (40a) und einen zweiten Teilhohlraum (40b) erfolgt.

15. Kantenschutz (1) nach einem der Ansprüche 11 bis 14, **dadurch gekennzeichnet, dass** das gummielastische Material auf Silikonkautschuken, Naturkautschuken, Butadien-Kautschuken, Styrol-Butadien-Kautschuken, Acrylnitril-Butadien-Kautschuken, Butylkautschuken, Ethylen-Propylen-Dien-Kautschuken, Chloropren-Kautschuken, Polyisopren-Kautschuken oder thermoplastischen Elastomeren basiert.

16. Kantenschutz (1) nach einem der vorangehenden Ansprüche, ferner umfassend ein oder mehrere Befestigungsmittel (46), insbesondere zur Anbringung an die Rückseite (10) des Anlageabschnitts (6), ausgewählt aus der Gruppe bestehend aus, insbesondere zerstörungsfrei lösbaren, Einrastvorrichtungen, Schraubsystemen und Haftsystemen, insbesondere Haftsystemen,
wobei das Haftsystem insbesondere ein doppelseitiges Klebeband umfasst oder hieraus besteht, insbesondere ein primerloses Klebeband.

17. Kantenschutz (1) nach Anspruch 16, **dadurch gekennzeichnet, dass** die Rückseite (10) des Anlageabschnitts (6) vor Inkontaktbringen mit dem Haftsystem, insbesondere einer der Klebeseiten des doppelseitigen Klebebandes, eine Plasmabehandlung erfahren hat.

18. Kantenschutz (1) nach einem der vorangehenden Ansprüche, **dadurch gekennzeichnet, dass**
durch Druck auf die Hebeleinheit (14), insbesondere den Hebelbalken (26), die Kantenschutzlippe (2) in Richtung der Rückseite (10) des Anlageabschnitts (6) und/oder in Richtung der Auswölbung (20) bewegbar ist.

19. Verwendung des Kantenschutzes (1) nach einem der vorangehenden Ansprüche, für den, insbesondere temporären, Schutz, insbesondere vor Lackschäden, Kratzern und/oder Glasbruch, einer Türkante eines Kraftfahrzeugs, insbesondere einer Kraftfahrzeug-Vordertür, einer Glastür oder einer Sicherheitstür und/oder für den Schutz von Gegenständen und/oder Materialien, die bei einem Zusammenstoß mit der Türkante in Kontakt kommen, insbesondere benachbart parkende Kraftfahrzeuge.

20. Kit-of parts, umfassend
einen Kantenschutz (1) nach einem der Ansprüche 1 bis 18 und ein oder mehrere Befestigungsmittel (46), insbesondere ein Haftsystem, besonders bevorzugt doppelseitiges Klebeband.

21. Tür, insbesondere Kraftfahrzeugtür, umfassend mindestens einen Kantenschutz (1) nach einem der Ansprüche 1 bis 18.

22. Kraftfahrzeug, umfassend mindestens einen Kantenschutz nach einem der Ansprüche 1 bis 18 oder mindestens eine Tür gemäß Anspruch 21.
